# EUROPEAN PATENT APPLICATION

(11) **EP 3 315 269 A2**
(43) Date of publication of application: **02.05.2018**
(21) Application number: 17198263.0
(22) Date of filing: 25.10.2017
(51) Int. Cl.: B25J 9/16

(54) **FORCE CONTROL COORDINATE AXIS SETTING DEVICE, ROBOT, AND FORCE CONTROL COORDINATE AXIS SETTING METHOD**

(30) Priority: 27.10.2016 JP 2016210310
(71) Applicant: Seiko Epson Corporation, Tokyo 160-8801 (JP)
(72) Inventor: Takeuchi, Kaoru, Nagano, 392-8502 (JP)
(74) Representative: Hoffmann Eitle

(57) **Abstract**

A force control coordinate axis setting device (50) is configured such that within a virtual space, a force direction axis parallel to a direction of a target force applied to a robot (1) and two orthogonal axes orthogonal to the force direction axis and orthogonal to each other are set, and the force direction axis and the orthogonal axes are set as coordinate axes of force control in the robot (1).

## Description

### BACKGROUND

### 1. Technical Field

The present invention relates to a force control coordinate axis setting device, a robot, and a force control coordinate axis setting method.

### 2. Related Art

In the related art, force control is known in which a force applied to a robot is adjusted to be a target force. When the force control is performed, a coordinate system which can easily express the target force is set in many cases. For example, JP-A-7-205068 discloses a technique as follows. In a state where a working tool maintains a working posture, a blade portion is pressed against a working target portion of a workpiece, and a reaction force thereof is detected. A direction of the reaction force is set as one axial direction of an orthogonal coordinate system. In addition, the orthogonal coordinate system for the force control is set using the one axial direction and a position parameter for generating a target trajectory.

According to the above-described technique in the related art, the robot actually performs the force control on the workpiece so as to set the axial direction of the orthogonal coordinate system. Therefore, the orthogonal coordinate system cannot be set if the robot, a tool, or the workpiece is not actually present. However, when a control program used by the robot is prepared or simulation is carried out for manufacturing the robot, it is sometimes necessary to set a coordinate axis for the force control in a state where the robot is not actually present. In the related art, it is not possible to set the coordinate system for the force control in the state where the robot is not present.

### SUMMARY

The present invention provides a force control coordinate axis setting device, a robot, and a force control coordinate axis setting method as set forth in the appended claims.

In a force control coordinate axis setting device according to an aspect of the invention, within a virtual space, a force direction axis parallel to a direction of a target force applied to a robot and two orthogonal axes orthogonal to the force direction axis and orthogonal to each other are set, and the force direction axis and the two orthogonal axes are set as force control coordinate axes in the robot.

According to this configuration, the coordinate axis of the force control can be set by performing a process within the virtual space . Accordingly, even in a state where the robot is not actually present, it is possible to define the coordinate axis for the force control. Therefore, even in the state where the robot is not actually present, it is possible to prepare a program relating to the force control or to carry out simulation of the force control.

The force control coordinate axis setting device may be configured such that the force direction axis passes through a position having a specific relationship with the robot which is plotted within the virtual space. According to the coordinate axis, it is possible to easily set the target force applied in a direction passing through the position having the specific relationship with the robot.

The force control coordinate axis setting device may be configured such that the position having the specific relationship is a position fixed with respect to an end effector of the robot or an application point of the target force. According to the coordinate axis, it is possible to easily set the target force applied in a direction passing through the position fixed to the end effector of the robot or the application point of the target force.

The force control coordinate axis setting device may be configured such that at least one of the force direction axis and the two orthogonal axes passes through one point on a workpiece which is plotted within the virtual space. According to the coordinate axis, it is possible to easily set a force passing through one point on the workpiece or a movement direction.

The force control coordinate axis setting device may be configured such that in a case where a plurality of directions of the target force are set, one of the orthogonal axes is set to be parallel to the target force. According to the coordinate axis, it is possible to easily set a target force in two directions.

### BRIEF DESCRIPTION OF THE DRAWINGS

The invention will be described with reference to the accompanying drawings, wherein like numbers reference like elements.
Fig. 1 is a perspective view of a robot.
Fig. 2 is a functional block diagram of a force control coordinate axis setting device.
Fig. 3 is a flowchart of a force control coordinate system setting process.
Fig. 4 illustrates an example of a user interface for setting an origin.
Fig. 5 illustrates an example of a user interface for setting an axial direction.
Fig. 6 illustrates a state where a coordinate axis is set using the user interface.
Fig. 7 illustrates the set coordinate axis.

### DESCRIPTION OF EXEMPLARY EMBODIMENTS

Hereinafter, embodiments according to the invention will be described in the following order with reference to the accompanying drawings. The same reference numerals will be given to the corresponding configuration elements in each drawing, and repeated description will be omitted.
1. Configuration of Robot
2. Setting Force Control Coordinate Axis
3. Other Embodiments

### 1. Configuration of Robot

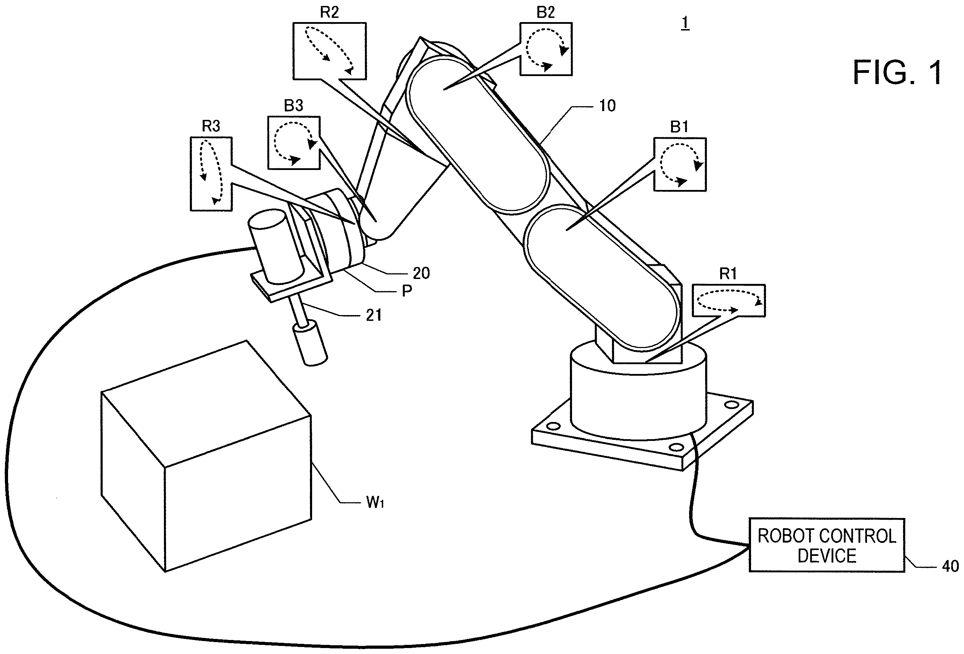

Fig. 1 is a perspective view of a robot 1 which can be controlled using a force control coordinate axis set by a force control coordinate axis setting device according to an embodiment of the invention. As illustrated in Fig. 1, the robot 1 includes an arm 10 and an end effector 20. The arm 10 is a six-axis arm having three bending joints B1 to B3 and three twisting joints R1 to R3. The bending joints B1 to B3 are configured such that members configuring the arm 10 rotate around an axis orthogonal to a longitudinal direction of the arm 10. The twisting joints R1 to R3 are configured such that members configuring the arm 10 rotate around an axis in the longitudinal direction of the arm 10. The arm 10 includes a motor (not illustrated) serving as a drive unit for operating the bending joints B1 to B3 and the twisting joints R1 to R3.

The end effector 20 is mounted on a distal end of the arm 10. The robot 1 drives the six-axis arm 10 so as to dispose the end effector 20 at any desired position within a movable range, and can adopt any desired posture (angle) . The end effector 20 includes a force sensor P and a grinder 21. The force sensor P measures a force of three axes which is applied to the end effector 20 and a torque applied around the three axes.

The robot 1 is a general-purpose robot which can carry out various types of work through a teaching process. In the present embodiment, the following case will be described as an example. In the example, the teaching process is performed in order for the grinder 21 to carry out work for removing a burr formed in a crest of a workpiece W₁, and the work for removing the burr is carried out. The robot 1 has a robot control device 40 connected thereto, and can control driving of the arm 10 and the grinder 21 under the control of the robot control device 40.

That is, the robot control device 40 controls a position and a posture of the robot 1 such that a whetstone of the grinder 21 comes into contact with the crest of the workpiece W₁. The robot control device 40 carries out the work for removing the burr by moving the grinder 21 in a direction toward the crest while applying a target force so as to press the whetstone of the grinder 21 against the crest of the workpiece W₁. In a course of this work, the robot control device 40 can control the robot 1 by using force control and position control. The robot control device 40 may be incorporated in the robot 1.

The force control is performed such that a force applied to the robot 1 (including a site interlocking with the robot 1) serves as a target force. That is, based on an output from the force sensor P, the robot control device 40 specifies the force applied to a specific site interlocking with the robot 1, and controls each joint of the arm 10 such that the force serves as the target force.

A controlled variable of the arm may be determined using various methods. For example, a configuration can be adopted in which the controlled variable is determined using impedance control. As a matter of course, the robot control device 40 may control the arm 10 such that a torque output from the force sensor P serves as a target torque. The specific site can be selected from various sites, depending on a type of work. For example, a tool center point (TCP: reference site moving together with the grinder 21) or an application point of the force (contact point between the whetstone of the grinder 21 and the workpiece W₁) can be selected as the specific site.

The position control is performed so as to move the robot 1 (including a site interlocking with the robot 1) to a planned position. That is, a target position and a target posture of a specific site interlocking with the robot 1 are specified by teaching or trajectory calculation. The robot control device 40 controls each joint of the arm 10 so as to follow the target position and the target posture. As a matter of course, in the control, the controlled variable of the motor may be acquired by feedback control such as proportional-integral-derivative (PID) control. Here, the specific site can also be selected from various sites, depending on a type of work. For example, the tool center point (TCP: reference site moving together with the grinder 21) or the application point of the force (contact point between the whetstone of the grinder 21 and the workpiece W₁) can be selected as the specific site.

### 2. Setting Force Control Coordinate Axis

As described above, the robot 1 is driven by the force control and the position control. However, in order to drive the robot 1, a plurality of coordinate systems in which mutual relationships are regulated in advance are used. For example, the coordinate system used to drive the robot 1 includes a robot coordinate system used to define the position or the posture of the arm 10 fixed so as not move relative to an installation position of the robot, a tool coordinate system (the origin is TCP, and the coordinate system moves together with TCP) which interlocks with the tool such as the grinder 21 such that the position or the posture is changed, a local coordinate system which can be optionally set by a user, and a force control coordinate system used to define the target force during the force control.

The robot coordinate system can be set at a design stage of the robot 1, for example, when a structure of the robot 1 is built using CAD data. The tool coordinate system can be set by specifying a tool attached to the end effector 20 and specifying TCP. The local coordinate system can be set at any desired stage by a user. Therefore, the robot coordinate system, the tool coordinate system, and the local coordinate system can be easily set at the design stage of the robot 1 even if the entity of the robot 1 is not present.

However, it is preferable that the force control coordinate system has an axis parallel to the direction of the target force in the force control. In the related art, it is difficult to set the force control coordinate system in a state where the entities of the robot 1, the grinder 21, and the workpiece W₁ are not present. That is, in a state where the entities of the robot 1, the grinder 21, and the workpiece W₁ are present beforehand, if the grinder 21 is brought into contact with the workpiece W₁, it is possible to detect the direction of the target force. However, this method cannot be adopted at the design stage where the entity of the robot 1 is not present.

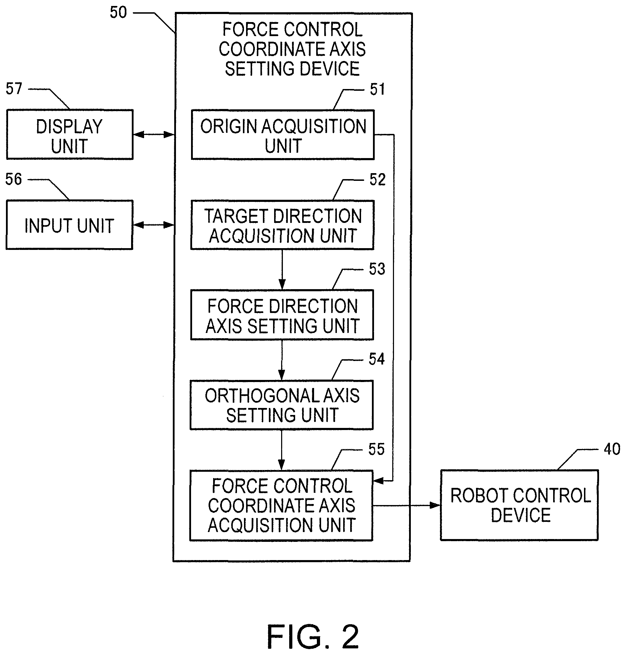

Therefore, the embodiment adopts a configuration in which the coordinate system in the force control can be set by the force control coordinate axis setting device. Fig. 2 illustrates a configuration example of the force control coordinate axis setting device. The force control coordinate axis setting device is realized by causing a computer having CPU, RAM, and ROM to execute a force control coordinate axis setting program. A form of the computer may be any desired form. For example, a configuration using a portable computer can be adopted.

A display unit 57 and an input unit 56 are connected to a force control coordinate axis setting device 50. In addition, a robot control device 40 can be connected to the force control coordinate axis setting device 50. The display unit 57 can display any desired image, based on a control signal output by the force control coordinate axis setting device 50. The input unit 56 is an operation input device such as a keyboard and a mouse. The force control coordinate axis setting device 50 receives various inputs by a user's operation performed on the input unit 56.

The force control coordinate axis setting device 50 can be connected to the robot control device 40, and the force control coordinate system defined by the coordinate axis set by the force control coordinate axis setting device 50 can be transmitted to the robot control device 40. Therefore, after the entities of the robot 1 and the robot control device 40 are manufactured, if information indicating the force control coordinate system is transmitted from the force control coordinate axis setting device 50 to the robot control device 40, the robot control device 40 can perform the force control by using the target force controlled by the force control coordinate system.

In the embodiment, the relationship between the robot coordinate system and the tool coordinate system is defined in advance, and coordinate system information indicating the relationship is recorded on a recording medium (not illustrated) . In a case where the local coordinate system is set, coordinate system information indicating the relationship between the robot coordinate system and the local coordinate system (which may be the relationship between the tool coordinate system and the local coordinate system) is similarly recorded on the recording medium (not illustrated) .

In this way, in a state where the robot coordinate system and the tool coordinate system (including the local coordinate system if the local coordinate system is set previously by a user) are defined in advance by using the coordinate system information, the force control coordinate axis setting program is executed. If the force control coordinate axis setting program is executed, the computer functions as the force control coordinate axis setting device 50 which can execute an origin acquisition unit 51, a target direction acquisition unit 52, a force direction axis setting unit 53, an orthogonal axis setting unit 54, and a force control coordinate axis acquisition unit 55.

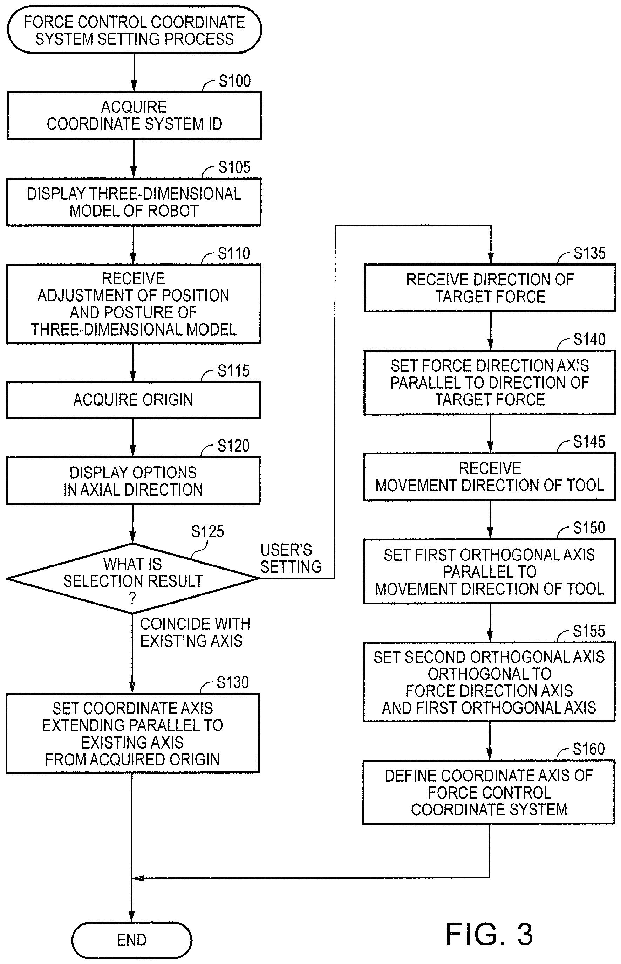

Fig. 3 is a flowchart illustrating a force control coordinate system setting process performed by using the force control coordinate axis setting program. In the force control coordinate system setting process, a user can set a plurality of force control coordinate systems. That is, a plurality of target forces of the force control can be set for the same robot. Accordingly, the plurality of force control coordinate systems can be set such that the coordinate system corresponding to each target force can be set.

Therefore, if the force control coordinate system setting process starts, the force control coordinate axis setting device 50 acquires a coordinate system ID (Step S100) . That is, the force control coordinate axis setting device 50 causes the display unit 57 to display a user interface screen for receiving the coordinate system ID to uniquely specify the force control coordinate system. If the user designates the coordinate system ID by operating the input unit 56, the force control coordinate axis setting device 50 associates the coordinate system ID with the force control coordinate system set through the subsequent process.

In the embodiment, the user defines the force control coordinate system within a virtual space. To this end, the force control coordinate axis setting device 50 displays a three-dimensional model of the robot (Step S105) . The virtual space is defined using an orthogonal coordinate system. An origin of the robot coordinate system is fixed to a predetermined position within the virtual space, and each axis of the robot coordinate system faces in a predetermined direction (the orthogonal coordinate system regulating the virtual space may be the same as the robot coordinate system) .

In the embodiment, as described above, the relationship between the robot coordinate system and the tool coordinate system (including the local coordinate system, in a case where the local coordinate system is set) is defined in advance by the coordinate system information. Accordingly, the force control coordinate axis setting device 50 causes the display unit 57 to display the three-dimensional model of the robot 1, the grinder 21, and the workpiece W₁ while using the relationship between the respective coordinate systems. In the embodiment, the three-dimensional model of the robot 1, the grinder 21, the workpiece W₁ is built in advance using CAD data, and is recorded on the recording medium (not illustrated).

Therefore, the force control coordinate axis setting device 50 specifies the position of each configuration element of the robot 1 within the virtual space, based on the position and direction of the robot coordinate system within the virtual space, and plots each configuration element on the display unit 57. In addition, the force control coordinate axis setting device 50 specifies the position and the posture of the grinder 21 in a case where the grinder 21 is connected to the end effector 20 of the robot 1, and plots the configuration element of the grinder 21 on the display unit 57 by using the position and the posture. Furthermore, the force control coordinate axis setting device 50 plots the workpiece W₁ at any desired position within the virtual space. The three-dimensional model can be plotted using various methods. For example, a three-dimensional shape is plotted using a frame or a polygon, and a texture is pasted on the outer surface of the three-dimensional shape. In this manner, the three-dimensional model is plotted through a process in which the texture visible in a state where the texture is viewed from a virtual viewpoint is plotted on the display unit.

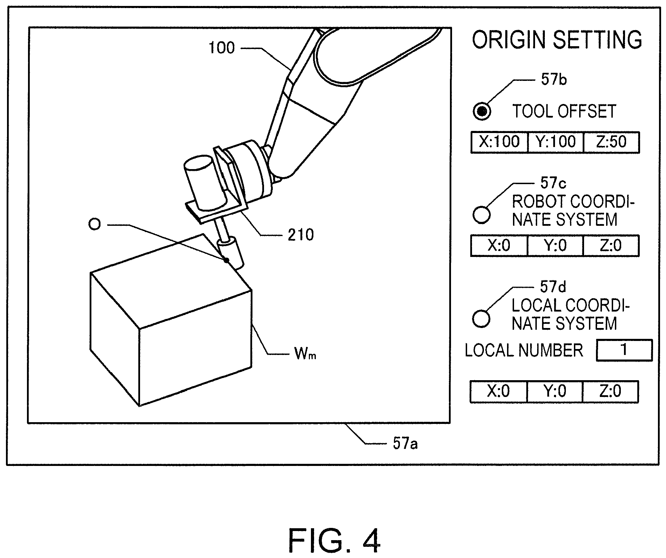

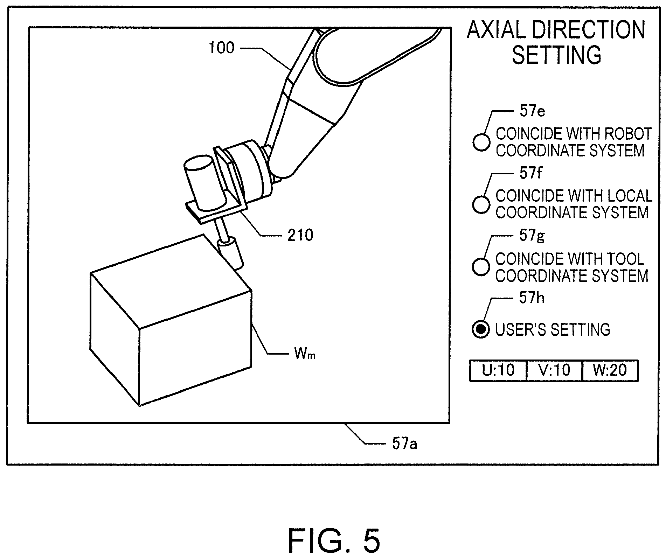

Figs. 4 and 5 illustrate an example of a screen displayed on the display unit 57. A robot 100, a grinder 210, and a workpiece Wₘ plotted using the three-dimensional model are displayed on a model display unit 57a. In the embodiment, a user can set the coordinate axis while viewing and using the robot 100, the grinder 210, and the workpiece Wₘ which are displayed on the model display unit 57a.

Next, the force control coordinate axis setting device 50 receives adjustment of the position and the posture of the three-dimensional model (Step S110) . That is, the user can input an instruction to adjust the position and the posture of the robot 100 which are displayed on the model display unit 57a by operating the input unit 56. In response to the instruction, the force control coordinate axis setting device 50 adjusts the position and the posture of the robot 100 on the display unit 57, and plots the robot 100 again using the position and the posture which are obtained after the adjustment.

As a matter of course, the position and the posture of the three-dimensional model may be changed using other various methods. A configuration may be adopted as follows. If a command equivalent to a command given when the robot 1 is driven as the entity is input, an operation the same as that of the robot 1 in accordance with the command is performed by the robot 100 within the virtual space. Alternatively, the user operates the mouse serving as the input unit 56, thereby enabling the user to change a position of a visible viewpoint of the robot 100 or a position of the workpiece Wₘ.

Figs. 4 and 5 illustrate a posture where the whetstone of the grinder 21 connected to the end effector of the robot 100 is in contact with the crest of a workpiece Wm, that is, a state where a posture of work for removing a burr is reproduced on the model display unit 57a. In the embodiment, in this way, the user reproduces a posture equal to that of the actual work in the robot 100 within the virtual space, and sets the coordinate axis in this state.

Next, the force control coordinate axis setting device 50 acquires an origin of the force control coordinate system (Step S115) . That is, the force control coordinate axis setting device 50 causes the display unit 57 to display the position which can be selected as the origin of the force control coordinate system as an option by using a function of the origin acquisition unit 51. If the user operates the input unit 56, the force control coordinate axis setting device 50 specifies the option selected by the user, based on content of the operation, and acquires the option as the origin of the force control coordinate system.

Fig. 4 illustrates a user interface screen when the origin is set. That is, in Fig. 4, radio buttons 57b to 57d for selecting the origin of the coordinate system are displayed on the right side of the model display unit 57a. Specifically, any one of the options of tool offset, the robot coordinate system, and the local coordinate system can be selected using the radio buttons 57b to 57d. If the user operates the input unit 56 and selects the radio button 57b, the tool offset (that is, the application point of the force: in this example, a position O where the whetstone of the grinder 210 is in contact with the crest of the workpiece Wₘ) is acquired as the origin of the force control coordinate system.

In a case where the tool offset is the origin of the force control coordinate system, the origin of the force control coordinate system can move together with the operation of the robot 100. That is, the tool offset is a point having a prescribed relationship with TCP set in the center of gravity of the grinder 210 serving as the tool. TCP can be changed while interlocking with a change in the position or the posture of the robot 100 or the grinder 21. Accordingly, the tool offset can also be changed while interlocking with a change in the position or the posture of the robot 100 or the grinder 21.

The numerical values of X: 100, Y: 100, and Z: 50 displayed below the radio button 57b are obtained by expressing a coordinate value of the origin acquired in Step S115 as a coordinate value within the virtual space. That is, in the example illustrated in Fig. 4, the coordinate within the virtual space of the tool offset represents a coordinate (X, Y, Z)=(100, 100, 50). The numerical values are displayed in a case where the radio button 57b is selected. In addition, if the user corrects the numerical values by using an input unit such as a keyboard, the user can correct the coordinate value of the origin within the virtual space.

If the user operates the input unit 56 and selects the radio button 57c, the origin of the robot coordinate system is acquired as the origin of the force control coordinate system. That is, the origin of the robot coordinate system is diverted as the origin of the force control coordinate system. In this case, the origin of the force control coordinate system does not move in accordance with a change in the position or the posture of the robot 100 or the grinder 21. If the radio button 57c is selected, the coordinate values X, Y, and Z of the origin within the virtual space are displayed below the radio button 57c. If the user corrects the numerical values by using the input unit such as the keyboard, the user can correct the coordinate value of the origin within the virtual space.

If the user operates the input unit 56 and selects the radio button 57d, the origin of the local coordinate system is acquired as the origin of the force control coordinate system. A plurality of the local coordinate systems can be set by the user, and the respective local coordinate systems are distinguished from each other using a local number. Therefore, under the radio button 57d, a box for inputting a local number is provided. When the radio button 57d is selected, the origin of the local coordinate system specified by the local number is diverted as the origin of the force control coordinate system. When the radio button 57d is selected, the coordinate values X, Y, Z of the origin in the virtual space are displayed below the radio button 57d. If the user corrects the numerical values by using the input unit such as the keyboard, the user can correct the coordinate value of the origin within the virtual space.

In a case where the position or the posture of the local coordinate system can be changed by the operation of the robot 100, the position of the origin of the force control coordinate system set using the radio button 57d can be changed. As a matter of course, as the origin, the origin of the coordinate system other than the above-described coordinate system may be diverted. A configuration may be adopted such that any desired point other than the coordinate system, for example, a position fixed to the end effector (one point within an object gripped by the end effector (TCP or the like)) can be selected as the origin. It can be expressed that the above-described tool offset, or TCP has a specific relationship with the robot 100. Therefore, if the force control coordinate system where the position has the specific relationship with the robot 100 serves as the origin is set, a force control coordinate axis passes through the position having the specific relationship with the robot 100. Accordingly, the user can easily set the coordinate axis.

As described above, various options can be selected as the origin of the force control coordinate system, and it is possible to select the origin which can move and the origin which does not move. The user may appropriately select the origin depending on the nature of the target force. For example, in a case where the target force is applied in a prescribed direction viewed from a specific site of the robot 100 such as when the target force in a prescribed direction viewed from the grinder 21 is applied to a contact point between the whetstone of the grinder 21 and the workpiece W₁, a position interlocking with the specific site of the robot 100 may be set as the origin. In addition, in a case where a force oriented in a specific direction and having a specific magnitude is applied to a workpiece fixed to the robot coordinate system, a fixed point may be set as the origin of the force control coordinate system. If the user selects the origin, the force control coordinate axis setting device 50 records the information (coordinate value within the virtual space) indicating the selected origin in RAM.

The force control coordinate system is preferably defined such that the target force of the force control can be easily set. Therefore, the embodiment adopts a configuration in which the force control coordinate axis can be oriented in various directions. In order to set the direction of the force control coordinate axis, the force control coordinate axis setting device 50 displays the options in the axial direction (Step S120) . In the embodiment, it is possible to set the force control coordinate axis in the direction the same as the existing coordinate system, and it is possible to set the force control coordinate axis in the direction parallel to the target force.

The force control coordinate axis setting device 50 causes the display unit 57 to display a user interface screen for selecting the options. Fig. 5 illustrates the user interface screen when the axial direction is set. That is, in Fig. 5, radio buttons 57e to 57h for selecting the axial direction are displayed on the right side of the model display unit 57a. Specifically, the radio buttons 57e to 57g for causing each axial direction of the robot coordinate system, the local coordinate system, the tool coordinate system to coincide with the direction of the force control coordinate axis, and the radio button 57h for setting the direction of the force control coordinate axis by the user are displayed. The numerical values of U: 10, V: 10, and W: 20 displayed below the radio button 57h indicate the orientation of the force control coordinate axis with respect to each axis of a reference coordinate system (for example, the robot coordinate system) .

If the user interface screen illustrated in Fig. 5 is displayed, the user can instruct the direction of the force control coordinate axis by operating the input unit 56 to select any one of the radio buttons 57e to 57h. If the direction of the force control coordinate axis is instructed, the force control coordinate axis setting device 50 determines the selection result by using the function of the target direction acquisition unit 52 (Step S125). In a case where it is determined that "to coincide with the existing axis" is selected, that is, in a case where any one of the radio buttons 57e, 57f, and 57g is selected, through the process of the force control coordinate axis acquisition unit 55, the force control coordinate axis setting device 50 sets the coordinate axis extending parallel to the existing axis selected in Step S120, based on the origin acquired in Step S115 (Step S130), and acquires the origin and the coordinate axis as the force control coordinate system.

On the other hand, in a case where it is determined in Step S125 that "user's setting" is selected, that is, in a case where the radio button 57h is selected, the force control coordinate axis setting device 50 receives the direction of the target force to be applied to the robot 100 within the virtual space by using the function of the target direction acquisition unit 52 (Step S135) . That is, the user can input the direction of the target force by operating the input unit 56, and the force control coordinate axis setting device 50 acquires the direction of the target force, based on the input.

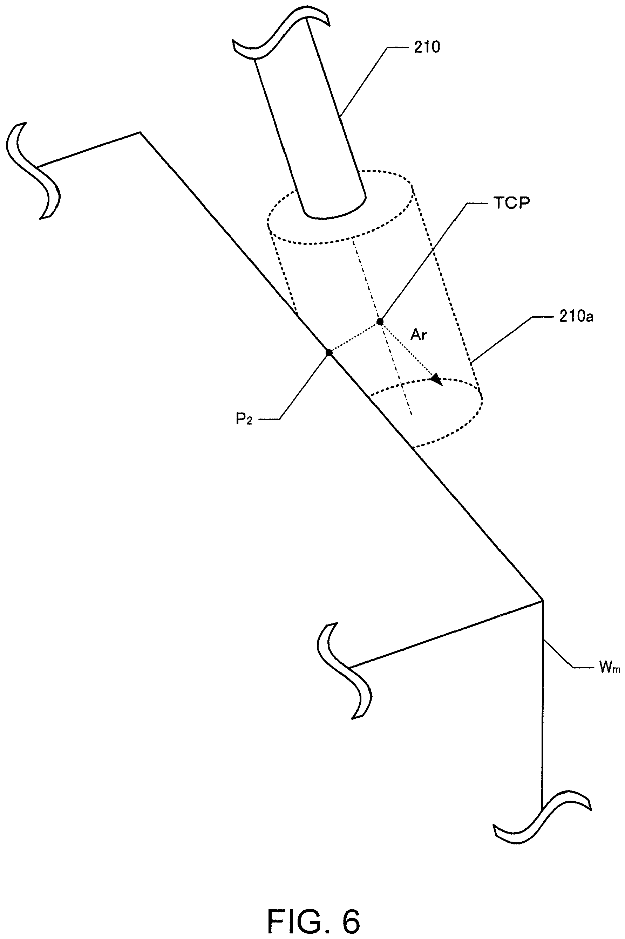

Fig. 6 is an enlarged view of the robot 100 as the three-dimensional model illustrated in Figs. 4 and 5. In Fig. 6, a whetstone 210a of the grinder 210 attached to the end effector of the robot 100 is illustrated using a frame as indicated by a broken line. In the embodiment, the user moves a pointer by using a mouse serving as the input unit 56. If the user performs a click operation on a specific position, the pointer is pulled to a previously determined position. The position to which the pointer is pulled represents a position which can serve as an end point of a vector indicating the direction of the target force. In the embodiment, the pointer is pulled to TCP set in advance within the grinder 210 and the crest of the workpiece Wₘ. As a matter of course, the pointer can be moved to any desired position by releasing the pulling of the pointer.

In the user interface, the user can input the direction of the target force by instructing both end points of the vector indicating the direction of the target force. In the work for removing the burr according to the embodiment, the direction of the target force is parallel to a direction facing from TCP to one point on the crest of the workpiece Wₘ. Therefore, the user performs an operation of specifying a first point by pulling the pointer to TCP through the operation of the mouse serving as the input unit 56, and further, the user performs an operation of specifying a second point P₂ by pulling the pointer to a point on the crest of the workpiece Wₘ. The force control coordinate axis setting device 50 acquires a direction facing from the initial first point to the second point, which is a direction connecting the two points specified by the operation, as the direction of the target force.

As a matter of course, various operations and assistance may be performed when the direction of the target force is set. For example, in the model display unit 57a, the position or the direction of the viewpoint for viewing the virtual space may be variable. In addition, if the direction of the target force has a specific relationship with the three-dimensional model (for example, in a case where an intersection angle between the direction of the target force and the crest is close to the most right angle, or in a case where the second point is movable on the crest and the distance connecting the first point and the second point is minimized), the assistance such as highlighting may be performed.

If the direction of the target force is received, the force control coordinate axis setting device 50 sets the force direction axis parallel to the direction of the target force by using the function of the force direction axis setting unit 53 (Step S140). That is, the force control coordinate axis setting device 50 sets the axis extending in the direction parallel to the direction of the target force acquired in Step S135 from the origin acquired in Step S115 by using the function of the force direction axis setting unit 53, as the force direction axis. Specifically, the force control coordinate axis setting device 50 defines the vector indicating the force direction axis by using the origin and one point on the line extending in the direction parallel to the direction of the target force acquired in Step S135, and records the information indicating the vector (coordinate value of an end point within the virtual space) in RAM.

Next, the force control coordinate axis setting device 50 receives a movement direction of the tool by using the function of the orthogonal axis setting unit 54 (Step S145) . That is, the user can input the movement direction of the tool (in this example, a movement direction of the grinder 21 in the work for removing the burr) by operating the input unit 56. The force control coordinate axis setting device 50 acquires the movement direction of the tool, based on the input.

In the embodiment, the user moves the pointer by using the mouse serving as the input unit 56, and performs a click operation at a desired position. If the click operation is performed, an arrow Ar connecting the position of the pointer on which the operation is performed and a previously selected point (the first point (TCP) or the second point P₂) is displayed. Therefore, the user can display the arrow Ar extending in any desired direction from the previously selected point by adjusting the position of the click operation. Therefore, the user can input the movement direction of the grinder 21 by adjusting the direction of the arrow Ar to the movement direction of the tool.

In the work for removing the burr according to the embodiment, the movement direction of the grinder 21 is parallel to the crest of the workpiece Wₘ. Therefore, the user performs an operation of setting the arrow Ar parallel to the crest of the workpiece Wₘ by operating the mouse serving as the input unit 56. Fig. 6 illustrates a state where the arrow Ar directed to be parallel to the crest of the workpiece Wₘ is displayed. The force control coordinate axis setting device 50 acquires the direction of the arrow Ar specified by the operation, as the movement direction of the grinder 21.

As a matter of course, various operations and assistance may be performed when the movement direction of the tool such as the grinder 21 is set. For example, in the model display unit 57a, the position or the direction of the viewpoint for viewing the virtual space may be variable. In addition, if the movement direction has a specific relationship with the three-dimensional model (for example, in a case where the workpiece Wₘ is parallel to the crest), the assistance such as highlighting may be performed.

If the direction of the target force is received, the force control coordinate axis setting device 50 sets a first orthogonal axis parallel to the movement direction of the tool by using the function of the orthogonal axis setting unit 54 (Step S150). That is, the force control coordinate axis setting device 50 sets the axis extending in the direction parallel to the movement direction acquired in Step S145 from the origin acquired in Step S115 by using the function of the orthogonal axis setting unit 54, as the first orthogonal axis. Specifically, the force control coordinate axis setting device 50 defines the vector indicating the first orthogonal axis by using the origin and one point on the line extending in the direction parallel to the movement direction acquired in Step S145, and records the information indicating the vector (coordinate value of an end point within the virtual space) in RAM.

Next, the force control coordinate axis setting device 50 sets a second orthogonal axis orthogonal to the force direction axis and the first orthogonal axis by using the function of the orthogonal axis setting unit 54 (Step S155). That is, the force control coordinate axis setting device 50 sets the axis extending in the direction perpendicular to both axes set in Steps S140 and S150 from the origin acquired in Step S115 by using the function of the orthogonal axis setting unit 54, as the second orthogonal axis. Specifically, the force control coordinate axis setting device 50 defines the vector indicating the second orthogonal axis by using the origin and one point on the line extending in the direction perpendicular to both axes set in Steps S140 and S150, and records the information indicating the vector (coordinate value of an end point within the virtual space) in RAM.

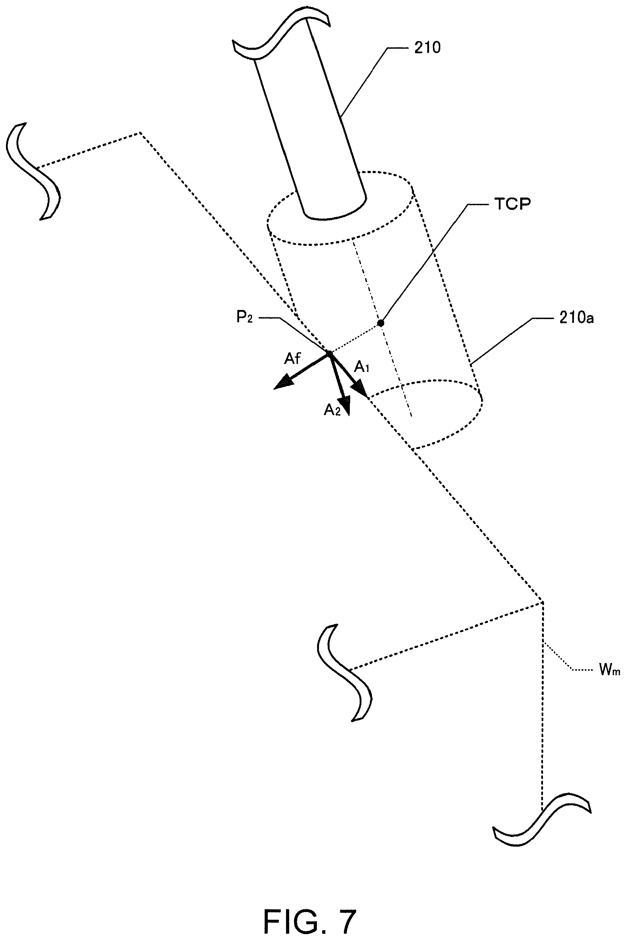

Fig. 7 illustrates the coordinate axis of the force control coordinate system in the same example as in Fig. 6 by using a solid arrow. In the example illustrated in Fig. 6, if the tool offset is selected as the origin of the force control coordinate system, a position P₂ (application point of the force) where the whetstone of the grinder 210 is in contact with the crest of the workpiece Wₘ serves as the origin of the force control coordinate system. The force direction axis parallel to the direction of the target force represents an axis Af, the first orthogonal axis parallel to the movement direction of the tool represents an axis A₁, and the second orthogonal axis perpendicular to both axes represents an axis A₂. In this way, in the embodiment, the origin and the direction of the coordinate system are specified, based on separately input information. Accordingly, as illustrated in Fig. 7, even if the tool offset is the origin, the direction of the coordinate system can be regulated, based on other indexes such as the direction of the target force viewed from TCP and the movement direction of the tool.

In a case where the tool offset is the origin as illustrated in Fig. 7, the tool offset is the position on the crest of the workpiece Wₘ. Therefore, the force direction axis and the two orthogonal axes pass through one point (position where the whetstone of the grinder 210 is in contact with the crest of the workpiece Wₘ) on the workpiece Wₘ plotted within the virtual space. In the work for removing the burr which is performed by the grinder 21 according to this example, the force control is performed when the work for the workpiece Wₘ is carried out, and the target force passes through one point on the workpiece Wₘ. Therefore, according to the embodiment, the user can set the force control coordinate axis which enables the user to easily set the target force through one point on the workpiece Wₘ. In addition, in the work for removing the burr which is performed by the grinder 21 according to this example, a tangent point between the robot and the workpiece moves in the direction passing one point on the workpiece Wₘ in a state where the target force is applied. Therefore, according to the embodiment, the user can set the force control coordinate axis which enables the user to easily set the movement direction in which the tool moves in the direction passing through one point on the workpiece Wₘ.

Next, the force control coordinate axis setting device 50 defines the coordinate axis of the force control coordinate system by using the function of the force control coordinate axis acquisition unit 55 (step S160) . That is, the force control coordinate axis setting device 50 defines a relationship between the origin and the coordinate axis of the force control coordinate system defined within the virtual space and the reference coordinate system (for example, the robot coordinate system) by using the function of the force control coordinate axis acquisition unit 55, and records the relationship in RAM. For example, in a case where the position or the posture of the origin can be changed, in addition to the position relationship between the origin of the reference coordinate system and the origin of the force control coordinate system, change characteristics of the origin and the posture of the force control coordinate system (for example, the relationship between the origin and the coordinate axis of the force control coordinate system and the origin and the coordinate axis of the tool coordinate system) are recorded in RAM.

If the force control coordinate system is set as described above, a program relating to the force control can be prepared, or the force control can be simulated. According to the above-described configuration, it is possible to set the coordinate axis (force control coordinate system) of the force control through the process within the virtual space. Accordingly, even in a state where the robot is not actually present, the coordinate axis for the force control can be defined. Therefore, even in the state where the robot is not actually present, the program relating to the force control can be prepared, or the force control can be simulated.

### 3. Other Embodiments

The above-described embodiments are merely examples for embodying the invention, and other various embodiments can be adopted. For example, the force control coordinate axis setting device may be incorporated in the robot, or may be provided for a place different from an installation place of the robot, for example, in an external server. Furthermore, the configuration of the above-described embodiments may be partially omitted, or the processing order may be changed or omitted. For example, regardless of the movement direction of the tool, a configuration may be adopted in which the first orthogonal axis can be set in any desired direction perpendicular to the force direction axis.

The robot may be operable by the force control, and may carry out work relating to the workpiece by using a movable unit having any desired form. The workpiece may be an object serving as a work target of the robot. The workpiece may be an object gripped by the end effector, or may be an object handled by the tool included in the end effector. Various objects can be employed as the workpiece.

A configuration may be adopted in which the movable unit moves relative to the installation position of the robot so as to change the posture, and its degree of freedom (the number of movable axes) can be optionally selected. The robot may employ various forms . The robot may be an orthogonal robot, a horizontally articulated robot, vertically articulated robot, or a double arm robot. As a matter of course, as the number of axes, the number of arms, or a form of the end effector, various forms can be employed.

The target force applied to the robot may be a target force applied to the robot when the robot is driven by the force control. For example, when a force (or a force calculated based on the force) detected by a force detection unit such as a force sensor, a gyro sensor, and an acceleration sensor is controlled to be a specific force, the force serves as the target force.

The orthogonal axis may be defined such that a three-dimensional orthogonal coordinate system is configured to include three axes including the force direction axis. Therefore, the orthogonal axis may be orthogonal to the force direction axis, and may be set in various directions as long as the orthogonal axes are orthogonal to each other.

Furthermore, in a case where a plurality of directions of the target force are set, one of the orthogonal axes may be set to be parallel to the target force. According to this coordinate axis, the target force in two directions can be easily set. It is preferable that this configuration is applied to a case where two target forces orthogonal to each other are set. For example, this configuration can be realized by modifying a setting process of the force control coordinate system illustrated in Fig. 3 in the above-described embodiments . Specifically, the modification can be realized by the following configuration. Steps S145 and S150 are omitted, and alternatively, directions of two target forces orthogonal to each other are received in Step S135. In Step S140, two axes orthogonal to the directions of the respective target forces are set, and the axes perpendicular to the two axes are set in Step S155.

## Claims

1. A force control coordinate axis setting device (50),
wherein within a virtual space, a force direction axis parallel to a direction of a target force applied to a robot (1) and two orthogonal axes orthogonal to the force direction axis and orthogonal to each other are set, and
wherein the force direction axis and the orthogonal axes are set as force control coordinate axes in the robot (1).

2. The force control coordinate axis setting device (50) according to claim 1,
wherein the force direction axis passes through a position having a specific relationship with the robot (1) which is plotted within the virtual space.

3. The force control coordinate axis setting device (50) according to claim 2,
wherein the position having the specific relationship is a position fixed with respect to an end effector (20) of the robot (1) or an application point of the target force.

4. The force control coordinate axis setting device (50) according to any one of claims 1 to 3,
wherein at least one of the force direction axis and the two orthogonal axes passes through one point on a workpiece (Wₘ) which is plotted within the virtual space.

5. The force control coordinate axis setting device (50) according to any one of claims 1 to 4,
wherein in a case where a plurality of directions of the target force are set, one of the orthogonal axes is set to be parallel to the target force.

6. A robot (1) that is controlled such that the target force regulated using the coordinate axis of the force control set by the force control coordinate axis setting device (50) according to any one of claims 1 to 5 is applied to the robot (1) .

7. A force control coordinate axis setting method comprising:
receiving an input in a direction of a target force applied to a robot (1) within a virtual space;
setting a force direction axis parallel to the input direction of the target force;
setting two orthogonal axes orthogonal to the force direction axis and orthogonal to each other; and
acquiring the force direction axis and the orthogonal axes as force control coordinate axes in the robot (1).

8. The force control coordinate axis setting method (50) according to claim 7,
wherein the force direction axis passes through a position having a specific relationship with the robot (1) which is plotted within the virtual space.

9. The force control coordinate axis setting method (50) according to claim 8,
wherein the position having the specific relationship is a position fixed with respect to an end effector (20) of the robot (1) or an application point of the target force.

10. The force control coordinate axis setting method (50) according to any one of claims 7 to 9,
wherein at least one of the force direction axis and the two orthogonal axes passes through one point on a workpiece (Wₘ) which is plotted within the virtual space.

11. The force control coordinate axis setting method (50) according to any one of claims 7 to 10,
wherein in a case where a plurality of directions of the target force are set, one of the orthogonal axes is set to be parallel to the target force.
